# EUROPEAN PATENT SPECIFICATION

(11) **EP 2 677 475 B1**
(45) Date of publication and mention of the grant of the patent: **19.11.2014**
(21) Application number: 12173184.8
(22) Date of filing: 22.06.2012
(51) Int. Cl.: G06K 19/077, H01Q 1/22, H01Q 13/10, H01Q 7/00

(54) **Method for manufacturing long-range radio frequency identification metallic product and structure thereof**
Verfahren zur Herstellung eines metallischen Langbereichs-Funkfrequenzidentifizierungsprodukts, und Struktur davon
Procédé de fabrication de produit métallique à identification par radiofréquence à longue portée et structure d'arrière-plan de l'invention associée

(43) Date of publication of application: 25.12.2013
(73) Proprietor: Join Yiuh Industry Co., Ltd., Taichung City 412 (TW)
(72) Inventor: Chang, Shu-Ju, 412 Taichung City (TW)
(74) Representative: Viering, Jentschura & Partner Patent- und Rechtsanwälte

(56) References cited:
- DE-U1-202008 001 549
- US-A1- 2009 058 602
- US-A1- 2010 052 859
- US-A1- 2011 227 799

## Description

### 1. Field of the Invention

The invention relates to a method for manufacturing a long-range radio frequency identification metallic product and a structure thereof, providing long-range reading and transmitting effects and preventing the RFID from being duplicated.

### 2. Description of Related Art

Radio Frequency Identification (RFID) skills have been widely applied to various fields such as industrial automation, commercial automation, traffic and transportation control management. With the increasing researches related to ultra-high-frequency (UHF) RFID systems, long-range reading and transmitting effect, high efficiency and low cost of RFID skills can be realized. Therefore, with the advantages such as non-contact, low cost, advanced anti-counterfeit and mass-production, the RFID skills has gradually replaced conventional two-dimensional bar code skills in the present markets.

In general, due to microstrip antennas themselves defectively characterized with narrow band limitation, the majority of microstrip antennas can be limitedly designed as single-frequency and narrow band responses. Taking ultra-high frequency electronic tags, which generally incorporated with printed antennas and mostly being microstrip antennas and printed dipoles, for example, due to signals transmitted from the electronic tags being easily reflected by metallic surfaces to cause signal-receiving abnormalities or even non-motions and signal reading problems, it can be appreciated that the ultra-high frequency electronic tags are actually not suitable for being used in an environment surrounded with metallic objects, such as metallic labels, automobiles, motorcycles, vehicle license plates and electric power facilities. Alternatively, the ultra-high frequency electronic tags, are majorly applied to non-metallic medium surfaces of general merchandise, commodities and books. Basically, the majority of improved electronic tag antennas used for metallic surfaces are based on the conventional electronic tag antennas and skills, such as increasing the size of the electronic tag antenna or increasing the metallic surface distance to reduce the undesired effects to the electronic tag antenna caused by the metallic reflective surfaces, or adopting the standardized slotting method to combine with the electronic tags. In the method of increasing the size of the electronic tag antenna or increasing the metallic surface distance to reduce the undesired effects to the electronic tag antenna caused by the metallic reflective surfaces, the height or distance between the electronic tag and the metallic surface shall be kept over than 2.5 mm. In this way, the reading distance of the electronic tag can be increased, but the total cost of the electronic tag is increased and the bandwidth of the antenna is reduced, and also the undesired effects to the electronic tag antenna caused by the metallic reflective surfaces still cannot be eliminated. In view of this, the conventional electronic tag antennas are almost applied for the places with non-metallic surfaces. For example, Electronic Toll Collection (ETC) in Taiwan and the designs of general identification tags. On the other hand, in the combination technique of the standardized slotting method and the electronic tags, the reliability and smoothness of the product are relatively unstable and uncontrollable, and particularly the joint points between the chip and the metallic contacts of the metallic antenna are separated from each other due to the property of thermal expansion and cold shrinkage and long-term operation. In this design, impedance matching shall be performed between each of the metallic antennas and the chip, or the frequency bias or field pattern variations are possibly occurred. In general, joint points between the chip and the metallic contacts of the metallic antenna are treated by conductive glue adhering, copper pouring, copper electroplating and vacuum copper sputtering, etc. Taking the conductive glue for example, the lift span of the conductive glue in the room temperature is about two to five years. If the conductive glue is hardened or oxidized, a certain resistance is formed in the bonding layer disposed between the hardened conductive materials and the neighboring materials in the conductive glue, and the resistance of the accumulated conductive materials in the conductive glue results in the rising of the VF value and a bulky change of the frequency bias and field pattern variation. Thus, it is difficult to control the credibility of the conductive glue with respect to lift span and temperature. The problems caused by the copper pouring method are slightly similar to that of the conductive glue adhering method. In the copper electroplating method, due to the different expansion coefficients of aluminum material and the copper material, the chip and the metallic antenna are possibly separated from each other caused by the peeling of the electroplated copper layer. In the vacuum copper sputtering method, the vacuum copper sputtering method has a stability superior to the copper electroplating method, but the operation cost is extremely high when dealing with the large-sized product with a small sputtering area. Besides, when the electronic tag is combined to the antenna by the standardized slotting method, it is usually that the connection of the electronic tag and the antenna cannot be prevented from crashing, scratching, moistening and stealing.

Ceramic dielectric microstrip antenna is applicable to metallic surfaces, capable of providing high dielectric constant to obtain a minimized antenna size and utilizing the metallic surface as an extended reflective surface to stabilize the performance and to increase directivity, but not suitable for being the economic electronic tag due to its high manufacturing cost. Alternatively, an artificial magnetic conductor (AMC) structure, characterized with high impedance to generate a magnetic-flow direction between the AMC structure and the economic electronic tag identical to that between the metallic surface and the AMC structure, can be laminated between an antenna radiation surface and the metallic surface to increase the reading range and gains of the economic electronic tag, but the AMC skills are still in experimental stage due to its difficulty and high cost.

### SUMMARY OF THE INVENTION

To prevent the signals of ultra-high-frequency (UHF) RFID from being spoilt by interference from the metallic surface or parts, the invention provides a metallic plate of a metallic product to be a metallic first antenna body and constitutes a first antenna by forming a resonance chamber on the metallic first antenna body. In an electronic tag module preparation, a small-sized microstrip loop metallic second antenna provided with breaking cutlines is bonded to and sealed in the metallic first antenna so that the second antenna is matching with the metallic first antenna on the resonance chamber. With an anti-interference treatment on the surface of the metallic first antenna, an ultra-high-frequency (UHF) RFID disposed in a radio frequency identification (RFID) metallic product is capable of being normally operated without interference from the metallic surface and providing excellent converted field patterns, effectively attaining a ten-meter long-range reading and transmitting effects. Further, due to the design of the breaking cutlines on the second antenna of the electronic tag module patch, the second antenna of the electronic tag module patch is damaged and invalid when the electronic tag module patch is removed by tearing along the breaking cutlines, thereby preventing the RFID from being removed and duplicated.

An object of the invention is to provide a method for manufacturing a long-range radio frequency identification metallic product. The method of the invention at least comprises a metallic first antenna preparation, an electronic tag module patch preparation, an electronic tag mounting process, an electronic tag sealing process and an identity surface treatment process. In the metallic first antenna preparation a metallic first antenna is manufactured by a metallic first antenna body manufacturing process, a resonance chamber molding manufacturing process and a resonance chamber surface treating process. In the metallic first antenna body manufacturing process a metallic first antenna body of a predetermined shape is formed by punching on a metallic plate selected from a metallic product. In the resonance chamber molding manufacturing process two long inner slots and an outer slot are formed on one sidewall of the metallic first antenna body by punching, a geometry concave slot is formed on an intersection of the inner slots and the outer slot and having a height difference with respect to a hole-outer surface by punching or forging or machining of computer numerical control milling machine, and a rectangular recessed portion molded as a resonance chamber is formed on the intersection of the inner slots and the outer slot within the concave slot, wherein an inner surface of the concave slot located outside the rectangular recessed portion is served as a metallic ground surface for the resonance chamber. In the resonance chamber surface treating process a surface of the resonance chamber surface is treated by a ceramic processing so that an anti-interference ceramic thin film is formed on the surface of the resonance chamber. In the electronic tag module patch preparation an electronic tag module patch is formed by a substrate integrated process, an antenna allocation chip bonding process and a module packaging process, wherein in the substrate integrated process a first rigid clip made of an insulating low dielectric coefficient material and provided with a breaking cutline is bonded to a rigid thin-plate substrate made of a low dielectric coefficient material, in the antenna allocation chip bonding process a loop copper foil second antenna or inductance formed by etching and a radio frequency identification chip are attachingly bonded on the first rigid clip, and a plurality of conductive metallic wires made of gold, aluminum and copper are electrically connected between the copper foil second antenna and the radio frequency identification chip on the first rigid clip by wire bonding, and in the module packaging process a second rigid clip which is made of an insulating low dielectric coefficient material and provided with a breaking cutline corresponding to the breaking cutline of the first rigid clip is overlapped on a bottom surface of the first rigid clip so that the copper foil second antenna and the radio frequency identification chip are packaged between the first rigid clip and the second rigid clip, and a bottom surface of the second rigid clip is served as a mounting surface when the electronic tag module patch and the metallic first antenna are jointed. In the electronic tag mounting process a mounting surface of the electronic tag module patch is bonded to the resonance chamber of the metallic first antenna and jointed to the metallic ground surface within the concave slot so that the loop copper foil second antenna or inductance is matched to the metallic first antenna at the rectangular recessed portion to generate resonance and induction. In the electronic tag sealing process a colloidal filling glue, which is filled in the resonance chamber of the metallic first antenna, the outer slot of the metallic first antenna body and the concave slot attached with the electronic tag module patch by glue dripping or glue filling, is treated by baking and cooling processes in a stove so that the electronic tag module patch is sealed and bound in the metallic first antenna by the cured filling glue and the metallic first antenna is provided with a grinded and embellish glued surface. In the identity surface treatment process the metallic first antenna treated in the electronic tag sealing process being coated or sprayed on a surface thereof with an anti-interference ceramic paint and treated by baking and cooling processes in the stove so that an anti-interference surface layer is formed on the surface of the metallic first antenna. With the fulfillment of the above-described manufacturing processes, ultra-high-frequency (UHF) RFID skills can be smoothly applied on the various metallic products (e.g., vehicle license plate) without interference. Electromagnetic waves radiated from a transmitter can be received by a metallic first antenna. With the resonance and induction generated by the resonance chamber located in the metallic first antenna and the second antenna of the electronic tag module patch, the signal generated can be transmitted to the RFID chip to achieve long-range reading and transmitting effects. Due to the breaking cutlines of the first rigid clip located on the second antenna of the electronic tag module patch, the second antenna of the electronic tag module patch is damaged and invalid when the electronic tag module patch glued and sealed in the metallic first antenna is removed by tearing along the breaking cutlines of the first rigid clip, thereby preventing the RFID from being duplicated.

Another object of the invention is to provide a method for manufacturing a long-range radio frequency identification metallic product, wherein in the metallic first antenna preparation the metallic first antenna is formed by molding the resonance chamber on the metallic first antenna body in the resonance chamber molding manufacturing process, the rectangular recessed portion of the resonance chamber having a width slightly greater than that of the inner slot is downwardly recessed from a plane of the metallic ground surface within the concave slot; in the antenna allocation chip bonding process of the electronic tag module patch preparation the width of the rectangular recessed portion corresponding to the width of the inner slot of the resonance chamber is formed by etching, the rectangular recessed portion has a length is capable of exceeding a rectangular loop copper foil second antenna disposed in the rectangular recessed portion of the resonance chamber, and the loop copper foil second antenna and the radio frequency identification chip are packaged by the bonding of the second rigid clip and the first rigid clip as well as the electronic tag module patch is formed in the module packaging process after the loop copper foil second antenna is electrically connected to the radio frequency identification chip on the first rigid clip; in the electronic tag mounting process the electronic tag module patch is bonded to the metallic ground surface of the concave slot of the resonance chamber of the metallic first antenna in the manner of utilizing the loop copper foil second antenna to be located at the rectangular recessed portion with two ends thereof averagely extended in the inner slots so that the loop fold-line second antenna has an ideal field pattern matching with the metallic first antenna on the resonance chamber, thereby generating excellent resonance and induction effects.

Still another object of the invention is to provide a method for manufacturing a long-range radio frequency identification metallic product, wherein in the identity surface treatment process the anti-interference surface layer formed on the surface of the metallic first antenna is capable of being printed with characters, numbers or figures thereon, thereby achieving the identifying purpose when performing non-radio identification.

Yet another object of the invention is to provide a method for manufacturing a long-range radio frequency identification metallic product, wherein in the identity surface treatment process the surface of the metallic first antenna treated in the electronic tag sealing process is capable of being formed with concave or convex characters, numbers or figures by punching and then being coated with the anti-interference ceramic paint or colored, and thus a metallic product such as a plate or vehicle license plate having the electronic tag formed with characters, numbers or figures thereon can be obtained after baking and cooling processes.

Yet another object of the invention is to provide a long-range radio frequency identification metallic product structure. The metallic product structure comprises a metallic first antenna and an electronic tag module patch. The metallic first antenna comprises a metallic first antenna body partially or totally made of a metallic plate shape of a metallic product, the metallic first antenna body comprises one sidewall provided with a resonance chamber including a geometry concave slot which is formed on an intersection of two long inner slots and an outer slot and having a height difference with respect to a hole-outer surface and a rectangular recessed portion which is formed on the intersection of the inner slots and the outer slot within the concave slot wherein the two inner slots are parallel to the sidewall of the metallic first antenna body and the outer slot is perpendicular to the sidewall of the metallic first antenna body, an anti-interference ceramic thin film is formed on the surface of the resonance chamber, and an inner surface of the concave slot which is located outside the rectangular recessed portion to be served as a metallic ground surface for the resonance chamber. The electronic tag module patch, bonded to the metallic ground surface of the resonance chamber of the metallic first antenna and fixedly sealed and bound in the metallic first antenna by a filling glue which is formed in the resonance chamber of the metallic first antenna by glue dripping or glue filling and cured by baking, comprises a thin-plate substrate made of a low dielectric coefficient material, a first rigid clip made of an insulating low dielectric coefficient material and provided with a breaking cutline to be bonded to the thin-plate substrate, a second antenna attachingly bonded on the first rigid clip and served as a rectangular loop copper foil antenna or inductance, a radio frequency identification chip attachingly bonded on the first rigid clip and electrically connected to the second antenna, and a second rigid clip made of an insulating low dielectric coefficient material and provided with a breaking cutline corresponding to the first rigid clip, wherein the second rigid clip is bonded to the first rigid clip so that the second antenna and the radio frequency identification chip are packaged between the first rigid clip and the second rigid clip, and a bottom surface of the second rigid clip is served as a mounting surface bonded to the metallic ground surface of the resonance chamber of the metallic first antenna. With the metallic product manufactured by the above-described structure, ultra-high-frequency (UHF) RFID skills can be smoothly applied on the various metallic products (e.g., vehicle license plate) without interference. Electromagnetic waves radiated from a transmitter can be received by a metallic first antenna. With the resonance and induction generated by the resonance chamber located in the metallic first antenna and the second antenna of the electronic tag module patch, the signal generated can be transmitted to the RFID chip to achieve long-range reading and transmitting effects. Due to the breaking cutlines of the first rigid clip located on the second antenna of the electronic tag module patch, the second antenna of the electronic tag module patch is damaged and invalid when the electronic tag module patch glued and sealed in the metallic first antenna is removed by tearing along the breaking cutlines of the first rigid clip, thereby preventing the RFID from being duplicated.

Yet another object of the invention is to provide a long-range radio frequency identification metallic product structure, wherein the rectangular recessed portion of the resonance chamber of the metallic first antenna having a width slightly greater than that of the inner slot is downwardly recessed from a plane of the metallic ground surface within the concave slot, and the rectangular loop copper foil second antenna of the electronic tag module patch located at the rectangular recessed portion of the resonance chamber of the metallic first antenna has a width corresponding to the width of the inner slot of the resonance chamber and a length capable of exceeding the rectangular recessed portion of the resonance chamber and being averagely extended in the inner slots, so that the loop fold-line second antenna has an ideal field pattern matching with the metallic first antenna on the resonance chamber to generate excellent resonance and induction effects.

Yet another object of the invention is to provide a long-range radio frequency identification metallic product structure, wherein the electronic tag module patch is fixedly sealed and bound in the metallic first antenna by the cured filling glue, and the metallic first antenna has a grinded and embellish glued surface coated with an anti-interference ceramic paint which is served as an anti-interference surface layer for resisting interference. The anti-interference surface layer of the metallic first antenna is printed with characters, numbers or figures thereon, thereby achieving the identifying purpose when performing non-radio identification.

Yet another object of the invention is to provide a long-range radio frequency identification metallic product structure wherein the electronic tag module patch is fixedly bound in the metallic first antenna, the metallic first antenna has a grinded and embellish glued surface capable of being formed with concave or convex characters, numbers or figures by punching and then being coated with the anti-interference ceramic paint or colored by baking, and thus a metallic product such as a plate or vehicle license plate having the electronic tag formed with characters, numbers or figures thereon can be obtained.

The above and other objects, features and advantages of the invention will become apparent from the following detailed description taken with the accompanying drawings.

### BRIEF DESCRIPTION OF THE DRAWINGS

Fig. 1 is a schematic view showing the process of the invention;
Fig. 2 is a schematic view showing the preparation flowchart of a metallic first antenna of the invention;
Fig. 3 is a perspective schematic view showing the structure of a metallic first antenna of the invention;
Fig. 4 is a perspective schematic view showing the structure of a resonance chamber of a metallic first antenna of the invention;
Fig. 5 is a schematic view showing the preparation flowchart of an electronic tag module patch of the invention;
Fig. 6 is an exploded schematic view showing the package structure of an electronic tag module patch of the invention;
Fig. 7 is a schematic view showing the structure of a first rigid clip of an electronic tag module patch of the invention;
Fig. 8 is a schematic view showing the status of an electronic tag module patch of the invention, wherein a first rigid clip is attachingly bonded with an antenna and a chip;
Fig. 9 is a perspective schematic view showing the bonding relationship of an electronic tag module patch and a resonance chamber of the invention;
Fig. 10 is a schematic view showing the status of an electronic tag module patch bonded to a resonance chamber of the invention;
Fig. 11 is a schematic view showing the sectional structure of a packaged, attached electronic tag module patch of the invention;
Fig. 12 shows a pattern embodiment of a completed metallic product of the invention;
Fig. 13 is a schematic view showing the sectional structure of an electronic tag module patch sealed in a metallic first antenna and operation relationship of the invention;
Fig. 14 is a schematic view showing a rectangular loop of a second antenna of the invention when a signal source is in an odd mode;
Fig. 15 is a schematic view showing a rectangular loop of a second antenna of the invention when a signal source is in an even mode;
Fig. 16 is a schematic view showing an radiated field patterns of the whole second antenna of the invention when a signal source is in an odd mode;
Fig. 17 is a schematic view showing a radiated field pattern of the whole second antenna of the invention when a signal source is in an even mode;
Fig. 18 is a frequency response curve of the return loss of a metallic first antenna and a second antenna of the invention, which is stimulated by HFSS simulation software;
Fig. 19 is a YZ3D field pattern diagram simulated by the simulation software in Fig. 18;
Fig. 20 is a XY3D field pattern diagram simulated by the simulation software in Fig. 18; and
Fig. 21 is a XZ3D field pattern diagram simulated by the simulation software in Fig. 18.

### DETAILED DESCRIPTION OF THE INVENTION

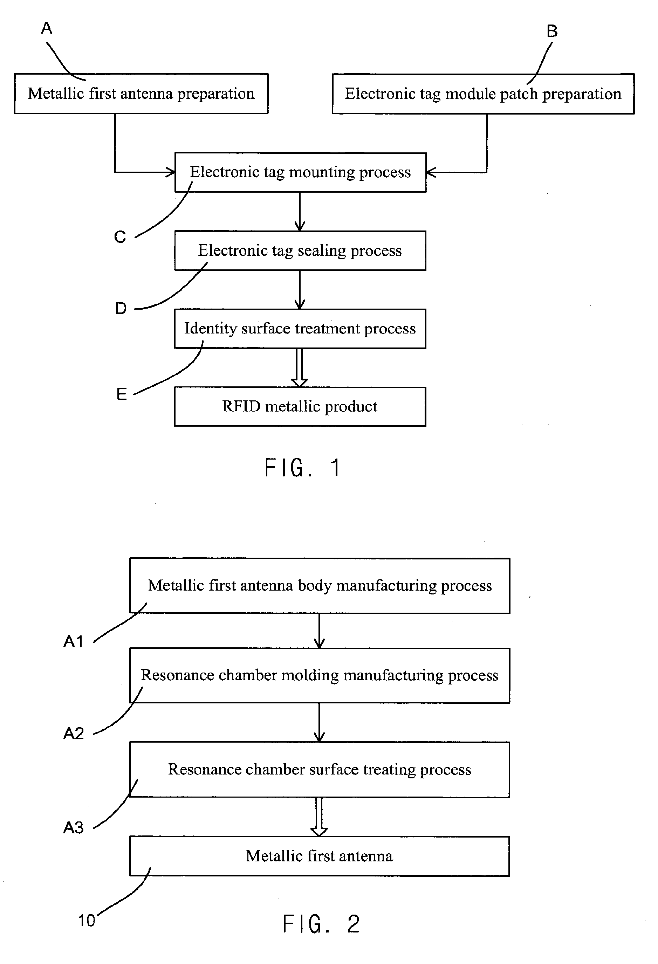

Referring to Fig. 1, a method for manufacturing a long-range radio frequency identification (RFID) metallic product, at least comprising a metallic first antenna preparation, an electronic tag module patch preparation, an electronic tag mounting process, an electronic tag sealing process, and an identity surface treatment process.

Referring to Fig. 2, in the metallic first antenna preparation, a metallic first antenna 10 is manufactured by a metallic first antenna body manufacturing process A1, a resonance chamber molding manufacturing process A2 and a resonance chamber surface treating process A3.

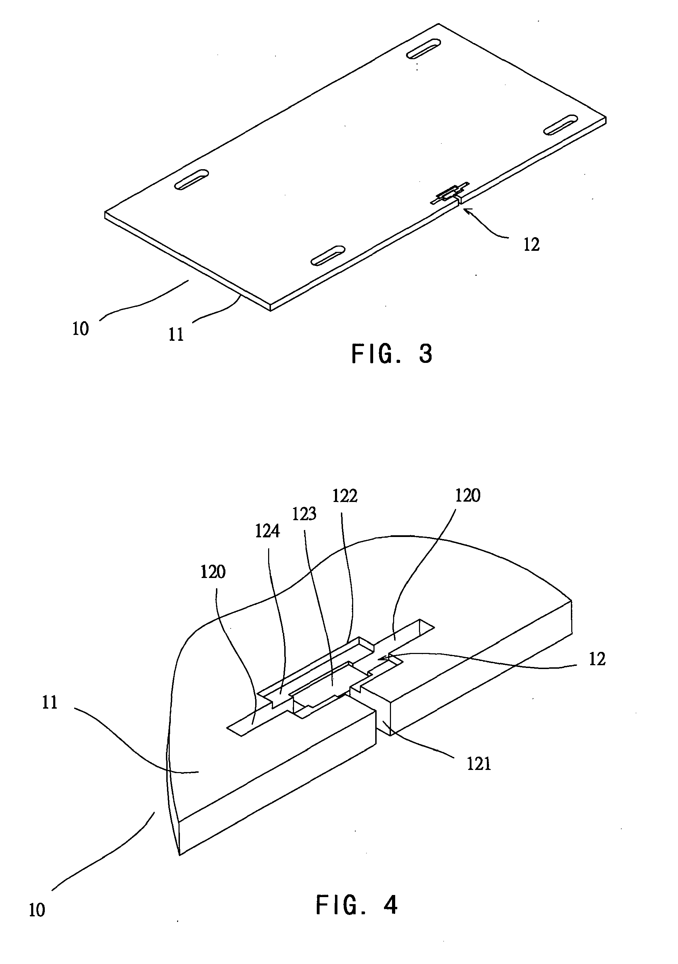

Referring to Fig. 3, in the metallic first antenna body manufacturing process, a metallic first antenna body 11 of a predetermined vehicle license plate shape is formed by punching on a metallic plate selected from a metallic product.

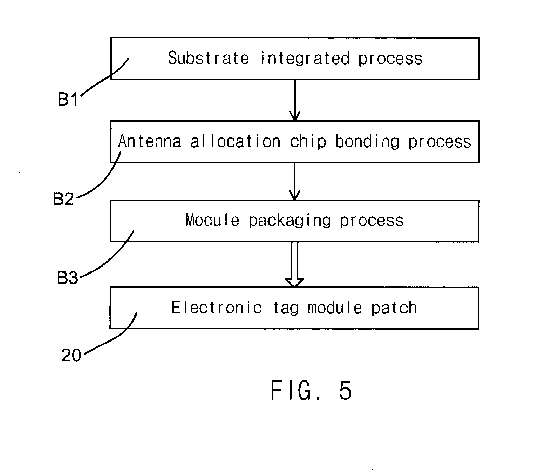

Referring to Fig. 4 in conjunction with Figs. 2, 3, in the resonance chamber molding manufacturing process A2, two long inner slots 120 and an outer slot 121 are formed on one sidewall of the metallic first antenna body 11 by punching, a geometry (rectangular) concave slot 122 is formed on an intersection of the inner slots 120 and the outer slot 121 and having a height difference with respect to a hole-outer surface by punching, forging or machining of computer numerical control (CNC) milling machine, and a rectangular recessed portion 123 molded as a resonance chamber 12 is formed on the intersection of the inner slots 120 and the outer slot 121 within the concave slot 122, wherein an inner surface of the concave slot 122 located outside the rectangular recessed portion 123 is served as a metallic ground surface 124 for the resonance chamber 12. In the resonance chamber surface treating process A3, a surface of the resonance chamber surface 12 is treated by a ceramic processing so that an anti-interference ceramic thin film is formed on the surface of the resonance chamber 12. As shown in Figs. 1 and 5, in the electronic tag module patch preparation, an electronic tag module patch 20 is formed by a substrate integrated process B1, an antenna allocation chip bonding process B2 and a module packaging process B3.

Referring to Figs. 5, 6 and 7, in the substrate integrated process B1, a first rigid clip 22 made of an insulating low dielectric coefficient material and provided with breaking cutlines 220 is bonded to a rigid thin-plate substrate 21 made of a low dielectric coefficient material. As shown in Figs. 5, 6 and 8, in the antenna allocation chip bonding process B2, a loop copper foil second antenna or inductance 23 formed by etching and a radio frequency identification (RFID) chip 24 are attachingly bonded on the first rigid clip 22, and a plurality of conductive metallic wires made of gold, aluminum and copper are electrically connected between the copper foil second antenna 23 and the RFID chip 24 on the first rigid clip 22 by wire bonding.

As shown in Figs. 5, 6 and 7, in the module packaging process B3, a second rigid clip 25, which is made of an insulating low dielectric coefficient material, provided with a breaking cutline and corresponding to the breaking cutline 220 of the first rigid clip 22, is overlapped on a bottom surface of the first rigid clip 22 so that the copper foil second antenna 23 and the RFID chip 24 are packaged between the first rigid clip 22 and the second rigid clip 25.

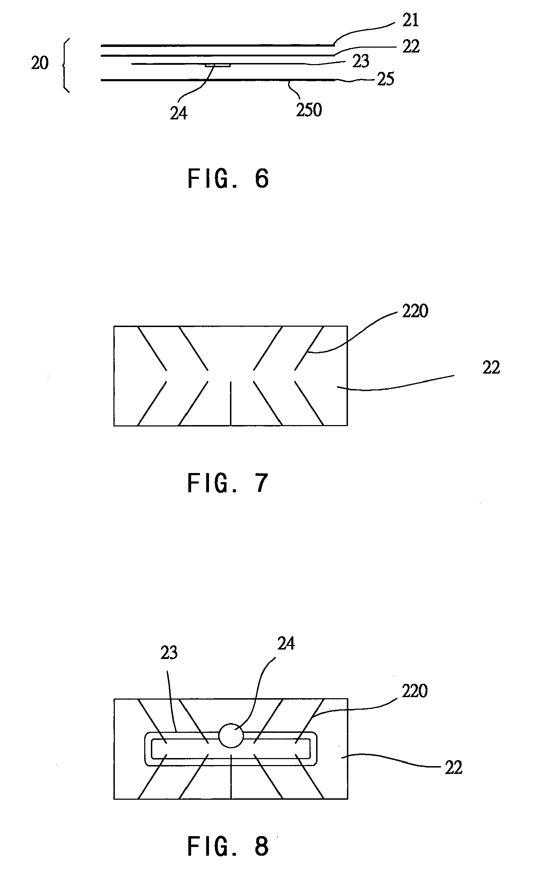

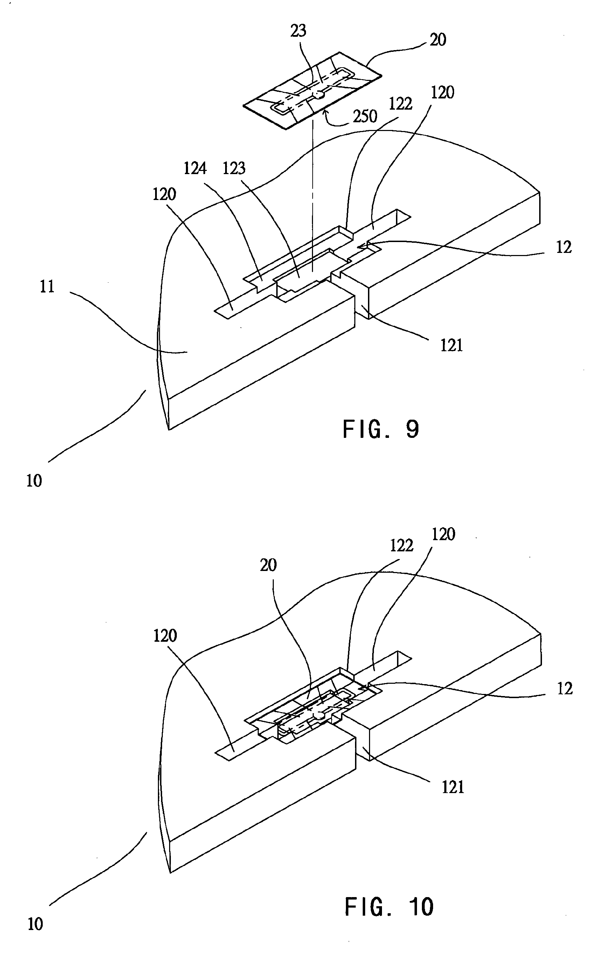

As shown in Figs. 6 and 9, in the electronic tag mounting process, a bottom surface of the second rigid clip 25 is served as a mounting surface 250 when the electronic tag module patch 20 and the metallic first antenna 10 are jointed. Note that he thin-plate substrate 21, the first rigid clip 22 and the second rigid clip 25 made by low dielectric coefficient plates can prevent the second antenna 23 from being affected by a large frequency deviation.

As shown in Figs. 1 and 9, in the electronic tag mounting process, a mounting surface 250 of the electronic tag module patch 20 is bonded to the resonance chamber 12 of the metallic first antenna 10 and jointed to the metallic ground surface 124 within the concave slot 122, so that the loop copper foil second antenna or inductance 23 is matched to the metallic first antenna 10 at the rectangular recessed portion 123 to generate resonance and induction.

As shown in Figs. 1, 10 and 11, in the electronic tag sealing process, a colloidal filling glue 30, which is filled in the resonance chamber 12 of the metallic first antenna 10, the outer slot 121 of the metallic first antenna body 11, and the concave slot 122 attached with the electronic tag module patch 20 by glue dripping or glue filling, is treated by baking and cooling processes in a stove, so that the electronic tag module patch 20 is sealed and bound in the metallic first antenna 10 by the cured filling glue, and the metallic first antenna 10 is provided with a grinded and embellish glued surface.

As shown in Figs. 1, 11 and 12, in the identity surface treatment process, the metallic first antenna 10 treated in the electronic tag sealing process is coated or sprayed on a surface thereof with an anti-interference ceramic paint and treated by baking and cooling processes in the stove, so that an anti-interference surface layer 40 is formed on the surface of the metallic first antenna 10. According to the above-described manufacturing processes, ultra-high-frequency (UHF) RFID skills can be smoothly applied on the various metallic products (e.g., vehicle license plates) without interference, and therefore the electromagnetic waves radiated from a transmitter can be received by the metallic first antenna 10 (e.g., metallic vehicle license plates).

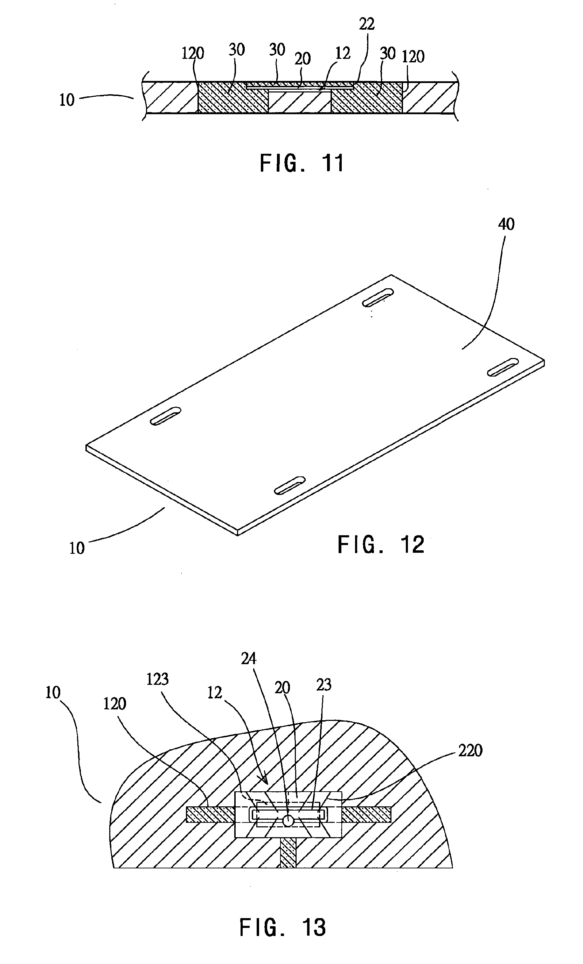

As shown in Fig. 13, with the resonance and induction generated by the resonance chamber 12 located in the metallic first antenna 10 and the second antenna 23 of the electronic tag module patch 20, the signal generated can be transmitted to the RFID chip 24 so that long-range reading and transmitting effects can be achieved. Further, due to the breaking cutlines 220 of the first rigid clip 22 located on the second antenna 23 of the electronic tag module patch 20, the second antenna 23 of the electronic tag module patch 20 is damaged and invalid when the electronic tag module patch 20 glued and sealed in the metallic first antenna 10 is removed by tearing along the breaking cutlines 220 of the first rigid clip 22, thereby preventing the RFID from being duplicated.

According to the above-described method in the embodiment and as shown in Figs. 1, 2, 3 and 4, in the metallic first antenna preparation, the metallic first antenna 10 is formed by molding the resonance chamber 12 on the metallic first antenna body 11 in the resonance chamber molding manufacturing process A2, and the rectangular recessed portion 123 of the resonance chamber 12 having a width slightly greater than that of the inner slot 120 is downwardly recessed from a plane of the metallic ground surface 124 within the concave slot 122.

As shown in Figs. 1, 5, 6 and 13, in the antenna allocation chip bonding process 132 of the electronic tag module patch preparation, the width of the rectangular recessed portion 123 corresponding to the width of the inner slot 120 of the resonance chamber 12 is formed by etching, and the rectangular recessed portion 123 has a length capable of exceeding a rectangular loop copper foil second antenna 23 disposed in the rectangular recessed portion 123 of the resonance chamber 12.

As shown in Fig. 8, after the loop copper foil second antenna 23 is electrically connected to the RFID chip 24 on the first rigid clip 22, the loop copper foil second antenna 23 and the RFID chip 24 are packaged by the bonding of the second rigid clip 25 and the first rigid clip 22 as well as the electronic tag module patch 20 is formed in the module packaging process.

As shown in Figs. 1, 9, 10 and 13, in the electronic tag mounting process, the electronic tag module patch 20 is bonded to the metallic ground surface 124 of the concave slot 122 of the resonance chamber 12 of the metallic first antenna 10 in the manner of utilizing the loop copper foil second antenna 23 to be located at the rectangular recessed portion 123 with two ends thereof averagely extended in the inner slots 120, so that the loop fold-line second antenna 23 has an ideal field pattern matching with the metallic first antenna on the resonance chamber 12 to generate excellent resonance and induction effects.

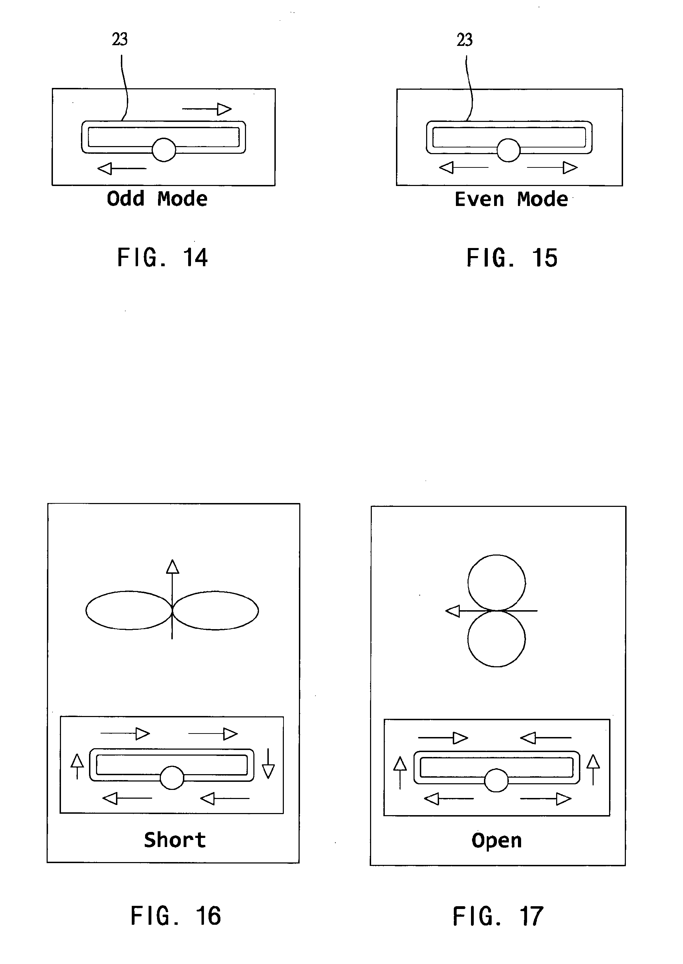

According to the method in the embodiment, the second antenna 23 bonded on the first rigid clip 22 is capable of triggering the resonance bandwidth by the loop fold-line thereof. In Figs. 14 and 15, the second antenna 23 is a rectangular loop antenna having a length equal to a wavelength. As shown in Figs. 16 and 17, when a signal source is in an even or odd mode, radiated field patterns of the whole second antenna 23 are linear polarizations, and the radiation direction is the difference between the radiated field patterns. A 90-degree phase difference formed between two orthogonal field patterns is the major condition for forming a circular polarization, and the same amplitude of the electric field and the symmetrical loop antenna structure result in the radiation field with linear polarization.

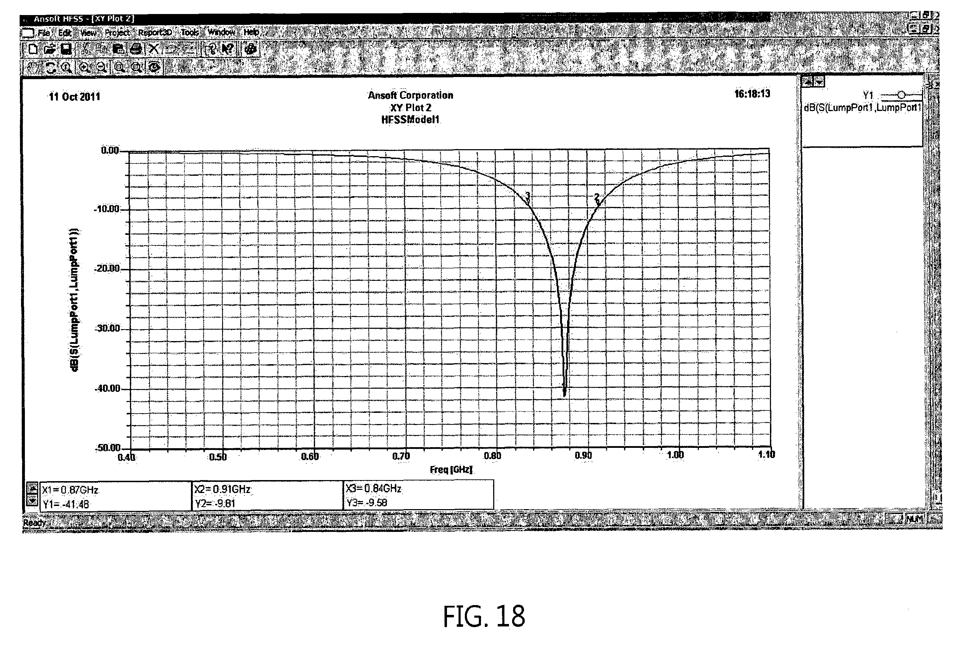

Fig. 18 shows a frequency response curve of return loss of the metallic first antenna 10 and the second antenna 23, which is stimulated by HFSS simulation software, wherein the bandwidth is ranged from 820 to 960MHz, and the distribution of the return loss is from -4dB, -9.58dB, -41.48dB, -9.81dB to -4dB.

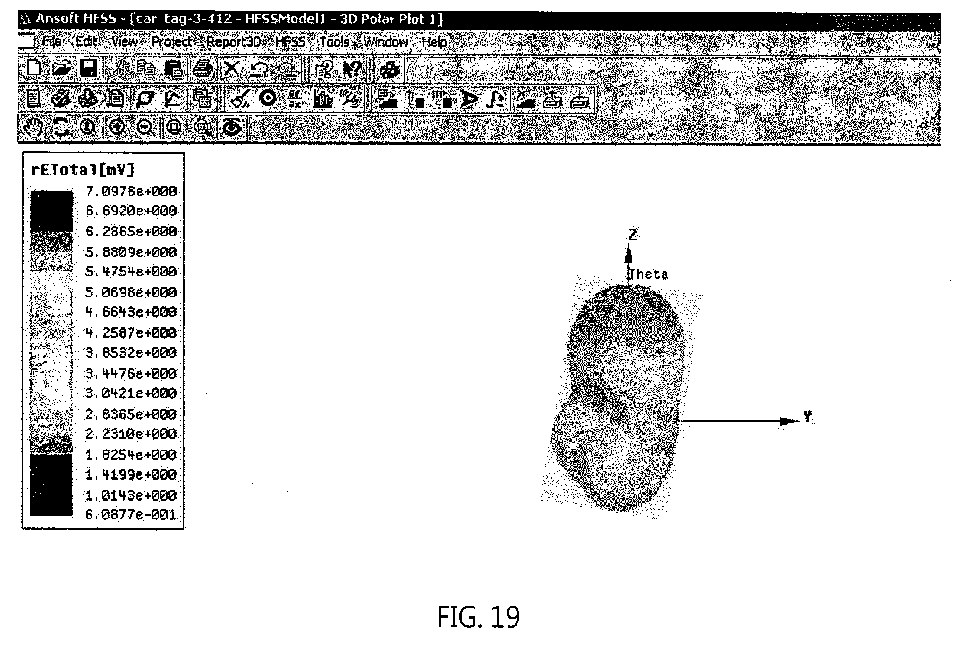

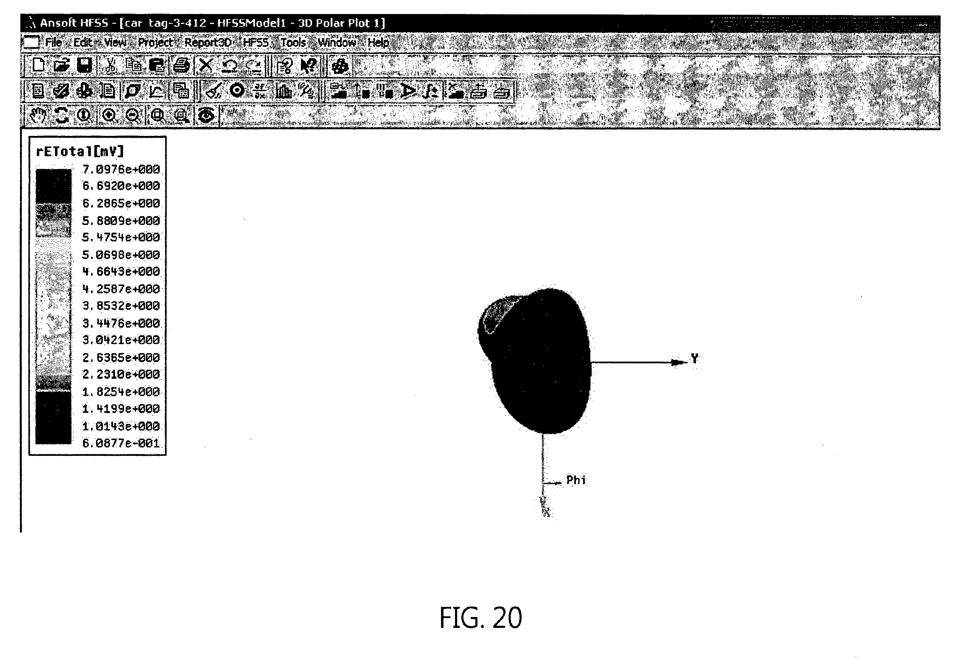

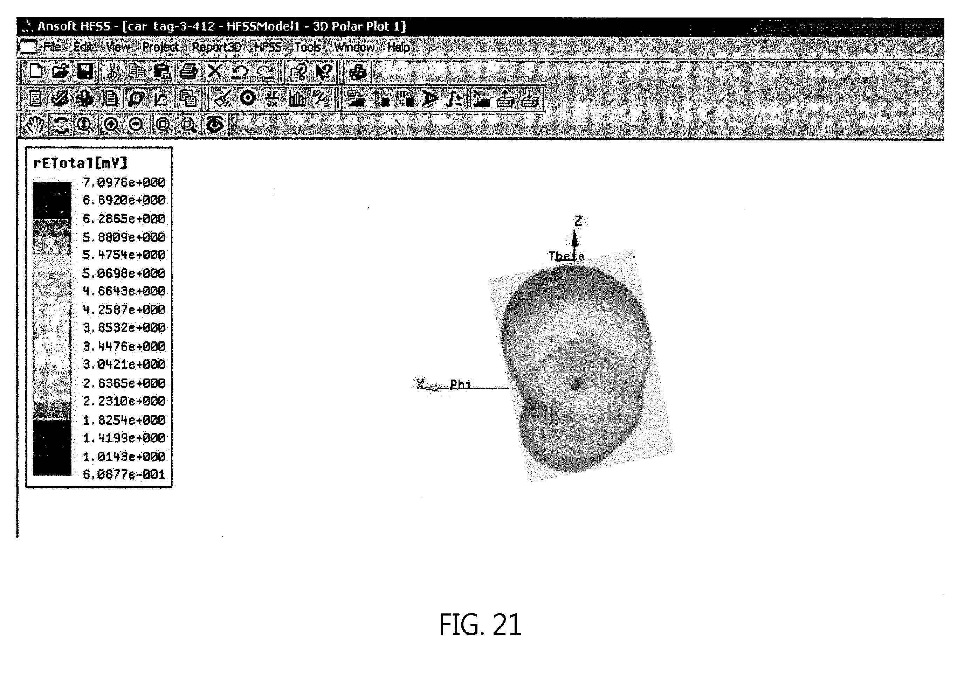

Figs. 19, 20 and 21 show YZ3D, XY3D and XZ3D field pattern diagrams simulated by the simulation software in Fig. 18.

A performance testing report of four real samples of electronic tags (vehicle license plates) manufactured by the method in the above-described embodiments is certificated by RFID Solution and Testing Center, Cheng Loong Corp. The result of the performance testing report, including the standard reading range of 8.85 meters, the reading range of 7.03 meters when the samples are shielded by water, and the reading range approximately ranged from 10.5 to 18.5 meters when the samples are tested in an environment with general space and background, proves that the manufactured RFID metallic products according to the method of the invention surely is characterized with long-range reading effects.

Additionally, for increasing appearance effects or purposes, the manufactured metallic products according to the above-described method of the embodiment can be further treated by following processes. As shown in Figs. 1 and 12, in the identity surface treatment process, the metallic first antenna 10 is formed with an anti-interference surface layer 40 on the surface thereof capable of being printed with characters, numbers or figures (not shown) thereon, thereby achieving the identifying purpose when performing non-radio identification. Further, the surface of the metallic first antenna 10 treated in the electronic tag sealing process is capable of being formed with concave or convex characters, numbers or figures (not shown) thereon by punching and then being coated with the anti-interference ceramic paint or colored thereon, and thus a metallic product (e.g., vehicle license plate) having the electronic tag formed with characters, numbers or figures thereon can be obtained after baking and cooling processes.

Further, according to the above-described method of the embodiment, the invention provides a long-range radio frequency identification (RFID) metallic product structure. As shown in Figs. 3, 4 and 9, the RFID metallic product structure comprises a metallic first antenna 10 and an electronic tag module patch 20. The metallic first antenna 10 comprises a metallic first antenna body 11 (e.g., a body of a vehicle license board) partially or totally served by or made of a metallic plate shape of a metallic product, and the metallic first antenna body 11 comprises one sidewall provided with a resonance chamber 12. In the metallic first antenna body 11, the resonance chamber 12 includes a geometry (rectangular) concave slot 122 which is formed on an intersection of two long inner slots 120 and an outer slot 121 and having a height difference with respect to a hole-outer surface and a rectangular recessed portion 123 which is formed on the intersection of the inner slots 120 and the outer slot 121 within the concave slot 122, wherein the two inner slots 120 are parallel to the sidewall of the metallic first antenna body 11 and the outer slot 121 is perpendicular to the sidewall of the metallic first antenna body 11, an anti-interference ceramic thin film is formed on the surface of the resonance chamber, and an inner surface of the concave slot which is located outside the rectangular recessed portion 123 is served as a metallic ground surface 124 for the resonance chamber 12.

As shown in Figs. 9, 10 and 11, an electronic tag module patch 20 is bonded to the metallic ground surface 124 of the resonance chamber 12 of the metallic first antenna 10 and fixedly sealed and bound in the metallic first antenna 10 by a filling glue, wherein the filling glue is formed in the resonance chamber 12 of the metallic first antenna 10 by glue dripping or glue filling and cured by baking. As shown in Fig. 6, the electronic tag module patch 20 comprises a thin-plate substrate 21, a first rigid clip 22, a second antenna 23, a radio frequency identification (RFID) chip 24 and a second rigid clip 25. As shown in Figs. 6 and 7, the thin-plate substrate 21 is a thin sheet made of a low dielectric coefficient material. As shown in Figs. 6 and 8, the first rigid clip 22, made of an insulating low dielectric coefficient material and provided with breaking cutlines 220, is bonded to the thin-plate substrate 21. The second antenna 23 attachingly bonded on the first rigid clip 22 is served as a rectangular loop copper foil antenna or inductance. The RFID chip 24 attachingly bonded on the first rigid clip 22 is electrically connected to the second antenna 23. The second rigid clip 25, made of an insulating low dielectric coefficient material and provided with breaking cutline (not shown) corresponding to the first rigid clip 22, is bonded to the first rigid clip 22 so that the second antenna 23 and the RFID chip 24 are packaged between the first rigid clip 22 and the second rigid clip 25.

Referring to Fig. 9 again, a bottom surface of the second rigid clip 25 is served as a mounting surface bonded to the metallic ground surface 124 of the resonance chamber 12 of the metallic first antenna 10. As shown in Fig. 12, by providing the metallic product (e.g., vehicle license plates) formed by the above-described structure, ultra-high-frequency (UHF) RFID skills can be smoothly applied on the various metallic products (e.g., vehicle license plates) without interference. As shown in Fig. 11 and 13, with the electromagnetic waves radiated from a transmitter to be received by the metallic first antenna 10 and with the resonance and induction generated by the resonance chamber 12 located in the metallic first antenna 10 and the second antenna 23 of the electronic tag module patch 20, the signal generated can be transmitted to the RFID chip 24 so that long-range reading and transmitting effects can be achieved. Further, due to the breaking cutlines 220 of the first rigid clip 22 located on the second antenna 23 of the electronic tag module patch 20, the second antenna 23 of the electronic tag module patch 20 is damaged and invalid when the electronic tag module patch 20 glued and sealed in the metallic first antenna 10 is removed by tearing along the breaking cutlines 220 of the first rigid clip 22, thereby preventing the RFID of the metallic product (e.g., vehicle license plates) from being duplicated.

According to the above-described embodiment and as shown in Figs. 3 and 4, in the metallic first antenna 10, the rectangular recessed portion 123 of the resonance chamber 12 having a width slightly greater than that of the inner slot 120 is downwardly recessed from a plane of the metallic ground surface 124 within the concave slot 122. As shown in Fig. 13, the rectangular loop copper foil second antenna 23 of the electronic tag module patch 20 is located on the rectangular recessed portion 123 of the resonance chamber 12, the width of the rectangular recessed portion 123 is corresponded to the width of the inner slot 120 of the resonance chamber 12, and the rectangular recessed portion 123 has a length exceeding a rectangular loop copper foil second antenna 23 disposed in the rectangular recessed portion 123 of the resonance chamber 12 and two ends averagely extended in the inner slots 120. The loop fold-line second antenna 23 has an ideal field pattern matching with the metallic first antenna on the resonance chamber 12, thereby generating excellent resonance and induction effects.

According to the above-described embodiment and as shown in Figs. 11 and 12, the electronic tag module patch 20 is fixedly sealed and bound in the metallic first antenna 10 by the cured filling glue, the metallic first antenna 10 has a grinded and embellish glued surface coated with an anti-interference ceramic paint which is served as an anti-interference surface layer 40 for resisting interference, and the anti-interference surface layer 40 of the metallic first antenna 10 is printed with characters, numbers or figures (not shown) thereon, thereby achieving the identifying purpose when performing non-radio identification.

According to the above-described embodiment and as shown in Figs. 11 and 12, the electronic tag module patch 20 is fixedly bound in the metallic first antenna 10, and the metallic first antenna 10 has a grinded and embellish glued surface capable of being formed with concave or convex characters, numbers or figures (not shown) by punching and then being coated with the anti-interference ceramic paint (to form the anti-interference surface layer 40) or colored by baking, and thus a metallic product (e.g., vehicle license plate) having the electronic tag formed with characters, numbers or figures thereon can be obtained after baking and cooling processes.

While the invention has been described in terms of preferred embodiments, those skilled in the art will recognize that the invention can be practiced with modifications within the scope of the appended claims.

## Claims

1. A method for manufacturing a long-range radio frequency identification metallic product, comprising the steps of:
a metallic first antenna preparation, an electronic tag module patch preparation, an electronic tag mounting process, an electronic tag sealing process and an identity surface treatment process;
in the metallic first antenna preparation a metallic first antenna being manufactured by a metallic first antenna body manufacturing process, a resonance chamber molding manufacturing process and a resonance chamber surface treating process;
in the metallic first antenna body manufacturing process a metallic first antenna body of a predetermined shape being formed by punching on a metallic plate selected from a metallic product;
in the resonance chamber molding manufacturing process two long inner slots and an outer slot being formed on one sidewall of the metallic first antenna body by punching, a geometry concave slot being formed on an intersection of the inner slots and the outer slot and having a height difference with respect to a hole-outer surface by punching or forging or machining of computer numerical control milling machine, and a rectangular recessed portion molded as a resonance chamber being formed on the intersection of the inner slots and the outer slot within the concave slot, wherein an inner surface of the concave slot located outside the rectangular recessed portion is served as a metallic ground surface for the resonance chamber;
in the resonance chamber surface treating process a surface of the resonance chamber surface being treated by a ceramic processing so that an anti-interference ceramic thin film is formed on the surface of the resonance chamber;
in the electronic tag module patch preparation an electronic tag module patch being formed by a substrate integrated process, an antenna allocation chip bonding process and a module packaging process, wherein in the substrate integrated process a first rigid clip made of an insulating low dielectric coefficient material and provided with a breaking cutline is bonded to a rigid thin-plate substrate made of a low dielectric coefficient material, in the antenna allocation chip bonding process a loop copper foil second antenna or inductance formed by etching and a radio frequency identification chip are attachingly bonded on the first rigid clip, and a plurality of conductive metallic wires made of gold, aluminum and copper are electrically connected between the copper foil second antenna and the radio frequency identification chip on the first rigid clip by wire bonding, and in the module packaging process a second rigid clip which is made of an insulating low dielectric coefficient material and provided with a breaking cutline corresponding to the breaking cutline of the first rigid clip is overlapped on a bottom surface of the first rigid clip so that the copper foil second antenna and the radio frequency identification chip are packaged between the first rigid clip and the second rigid clip, and a bottom surface of the second rigid clip is served as a mounting surface when the electronic tag module patch and the metallic first antenna are jointed;
in the electronic tag mounting process a mounting surface of the electronic tag module patch being bonded to the resonance chamber of the metallic first antenna and jointed to the metallic ground surface within the concave slot so that the loop copper foil second antenna or inductance is matched to the metallic first antenna at the rectangular recessed portion to generate resonance and induction;
in the electronic tag sealing process a colloidal filling glue, which is filled in the resonance chamber of the metallic first antenna, the outer slot of the metallic first antenna body and the concave slot attached with the electronic tag module patch by glue dripping or glue filling, is treated by baking and cooling processes in a stove so that the electronic tag module patch is sealed and bound in the metallic first antenna by the cured filling glue and the metallic first antenna is provided with a grinded and embellish glued surface; and
in the identity surface treatment process the metallic first antenna treated in the electronic tag sealing process being coated or sprayed on a surface thereof with an anti-interference ceramic paint and treated by baking and cooling processes in the stove so that an anti-interference surface layer is formed on the surface of the metallic first antenna.

2. The method for manufacturing a long-range radio frequency identification metallic product as claimed in claim 1, wherein
in the metallic first antenna preparation the metallic first antenna is formed by molding the resonance chamber on the metallic first antenna body in the resonance chamber molding manufacturing process, the rectangular recessed portion of the resonance chamber having a width slightly greater than that of the inner slot is downwardly recessed from a plane of the metallic ground surface within the concave slot;
in the antenna allocation chip bonding process of the electronic tag module patch preparation the width of the rectangular recessed portion corresponding to the width of the inner slot of the resonance chamber is formed by etching, the rectangular recessed portion has a length is capable of exceeding a rectangular loop copper foil second antenna disposed in the rectangular recessed portion of the resonance chamber, and the loop copper foil second antenna and the radio frequency identification chip are packaged by the bonding of the second rigid clip and the first rigid clip as well as the electronic tag module patch is formed in the module packaging process after the loop copper foil second antenna is electrically connected to the radio frequency identification chip on the first rigid clip; and
in the electronic tag mounting process the electronic tag module patch is bonded to the metallic ground surface of the concave slot of the resonance chamber of the metallic first antenna in the manner of utilizing the loop copper foil second antenna to be located at the rectangular recessed portion with two ends thereof averagely extended in the inner slots so that the loop fold-line second antenna has an ideal field pattern matching with the metallic first antenna on the resonance chamber.

3. The method for manufacturing a long-range radio frequency identification metallic product as claimed in claim 1, wherein in the identity surface treatment process the anti-interference surface layer formed on the surface of the metallic first antenna is capable of being printed with characters, numbers or figures thereon.

4. The method for manufacturing a long-range radio frequency identification metallic product as claimed in claim 1, wherein in the identity surface treatment process the surface of the metallic first antenna treated in the electronic tag sealing process is capable of being formed with concave or convex characters, numbers or figures by punching and then being coated with the anti-interference ceramic paint or colored.

5. A long-range radio frequency identification metallic product structure, comprising:
a metallic first antenna (10), comprising a metallic first antenna body (11) partially or totally made of a metallic plate shape of a metallic product, the metallic first antenna body (11) comprising one sidewall provided with a resonance chamber (12) including a geometry concave slot (122) which is formed on an intersection of two long inner slots (120) and an outer slot (121) and having a height difference with respect to a hole-outer surface and a rectangular recessed portion (123) which is formed on the intersection of the inner slots (120) and the outer slot (121) within the concave slot wherein the two inner slots (120) are parallel to the sidewall of the metallic first antenna body (11) and the outer slot (121) is perpendicular to the sidewall of the metallic first antenna body (11), an anti-interference ceramic thin film being formed on the surface of the resonance chamber (12), and an inner surface of the concave slot (122) which is located outside the rectangular recessed portion (123) to be served as a metallic ground surface (124) for the resonance chamber (12); and
an electronic tag module patch (20) bonded to the metallic ground surface of the resonance chamber (12) of the metallic first antenna (10) and fixedly sealed and bound in the metallic first antenna (10) by a filling glue which is formed in the resonance chamber (12) of the metallic first antenna (10) by glue dripping or glue filling and cured by baking, comprising a thin-plate substrate (21) made of a low dielectric coefficient material, a first rigid clip (22) made of an insulating low dielectric coefficient material and provided with a breaking cutline (220) to be bonded to the thin-plate substrate (21), a second antenna (23) attachingly bonded on the first rigid clip (22) and served as a rectangular loop copper foil antenna (23) or inductance, a radio frequency identification chip (24) attachingly bonded on the first rigid clip (22) and electrically connected to the second antenna (23), and a second rigid clip (25) made of an insulating low dielectric coefficient material and provided with a breaking cutline corresponding to the first rigid clip (22), wherein the second rigid clip (25) is bonded to the first rigid clip (22) so that the second antenna (23) and the radio frequency identification chip (24) are packaged between the first rigid clip (22) and the second rigid clip (25), and a bottom surface of the second rigid clip (25) is served as a mounting surface (250) bonded to the metallic ground surface (124) of the resonance chamber (12) of the metallic first antenna (10).

6. The long-range radio frequency identification metallic product structure as claimed in claim 5, wherein the rectangular recessed portion (123) of the resonance chamber (12) of the metallic first antenna (10) having a width slightly greater than that of the inner slot (120) is downwardly recessed from a plane of the metallic ground surface (124) within the concave slot (122), and the rectangular loop copper foil second antenna (23) of the electronic tag module patch (20) located at the rectangular recessed portion (123) of the resonance chamber (12) of the metallic first antenna (10) has a width corresponding to the width of the inner slot (120) of the resonance chamber (12) and a length capable of exceeding the rectangular recessed portion (123) of the resonance chamber (12) and being averagely extended in the inner slots (120).

7. The long-range radio frequency identification metallic product structure as claimed in claim 5, wherein the electronic tag module patch (20) is fixedly sealed and bound in the metallic first antenna (10) by the cured filling glue, and the metallic first antenna (10) has a grinded and embellish glued surface coated with an anti-interference ceramic paint which is served as an anti-interference surface layer for resisting interference.

8. The long-range radio frequency identification metallic product structure as claimed in claim 7, wherein the anti-interference surface layer of the metallic first antenna (10) is printed with characters, numbers or figures thereon.

9. The long-range radio frequency identification metallic product structure as claimed in claim 5, wherein the electronic tag module patch (20) is fixedly bound in the metallic first antenna (10), and the metallic first antenna (10) has a grinded and embellish glued surface capable of being formed with concave or convex characters, numbers or figures by punching and then being coated with the anti-interference ceramic paint or colored by baking.

## Patentansprüche

1. Ein Verfahren zur Herstellung eines langreichweitigen metallischen Radiofrequenz-Identifikationsproduktes, bestehend aus den Schritten:
eine Vorbereitung einer metallischen ersten Antenne, eine Vorbereitung eines elektronischen Etikettenmodulpatches, ein Montageprozess eines elektronischen Etiketts, ein Versiegelungsprozess des elektronischen Etiketts und ein Identitätsoberflächenbehandlungsprozess;
bei der Vorbereitung der metallischen ersten Antenne wird eine metallische erste Antenne hergestellt durch einen Herstellungsprozess des metallischen ersten Antennenkörpers, einen Formungsherstellungsprozess einer Resonanzkammer und einen Behandlungsprozess einer Resonanzkammeroberfläche;
bei dem Herstellungsprozess des metallischen ersten Antennenkörpers wird ein metallischer erster Antennenkörper von einer vorbestimmten Form durch Ausstanzen aus einer metallischen Platte, die von einem metallischen Produkt ausgewählt wurde, geformt;
bei dem Formungsherstellungsprozess der Resonanzkammer werden zwei lange innere Schlitze und ein äußerer Schlitz an einer Seitenwand des ersten metallischen Antennenkörpers durch Ausstanzen gebildet, ein geometrischer konkaver Schlitz wird an einem Schnittpunkt der inneren Schlitze und des äußeren Schlitzes gebildet und er hat eine Höhendifferenz bezogen auf eine Außenlochoberfläche durch Ausstanzen oder Schmieden oder Bearbeiten von einer computernumerischen Steuerungsfräsmaschine, und ein rechteckiger eingesenkter Bereich, der als eine Resonanzkammer geformt ist, ist an dem Schnittpunkt der inneren Schlitze und des äußeren Schlitzes innerhalb des konkaven Schlitzes ausgebildet, wobei eine innere Oberfläche des konkaven Schlitzes, der außerhalb des rechteckigen eingesenkten Bereiches angeordnet ist, als eine metallische Grundoberfläche des Resonanzkammer dient;
in dem Behandlungsprozess der Resonanzkammeroberfläche wird eine Oberfläche der Resonanzkammer durch einen keramischen Verfahrensschritt behandelt, so dass ein keramischer dünner Anti-Interferenz-Film auf der Oberfläche der Resonanzkammer ausgebildet wird;
bei der Vorbereitung des elektronischen Etikettenmodulpatches wird ein elektronisches Etikettenmodulpatch durch einen integrierten Substratprozess gebildet, ein Chipklebeprozess zur Bereitstellung der Antenne und ein Modulverpackungsprozess, wobei in dem integrierten Substratprozess ein erster starrer Clip, der aus einem isolierenden Material mit einem niedrigen dielektrischen Koeffizienten hergestellt ist und mit einer Bruch-Schnittlinie vorsehen ist, an ein Substrat aus einer starren dünnen Platte, die aus einem Material mit einem niedrigen dialektischen Koeffizienten hergestellt ist, geklebt wird, bei dem Chipklebeprozess zur Bereitstellung einer Antenne wird eine zweite Antenne aus einer Kupferfolienschleife oder eine Induktivität, die durch Ätzen gebildet wird, und ein Radiofrequenzidentifikationschip an den ersten starren Clip befestigend geklebt, und eine Mehrzahl von leitenden metallischen Drähten hergestellt aus Gold, Aluminium und Kupfer werden elektrisch zwischen der Kupferfolie der zweiten Antenne und dem Radiofrequenzidentifikationschip auf dem ersten starren Clip durch Drahtbonden miteinander verbunden, und bei dem Modulverpackungsprozess wird ein zweiter starrer Clip, der aus einem isolierenden Material mit einem niedrigen dielektrischen Koeffizienten hergestellt ist und eine Bruch-Schnittlinie entsprechend der Bruch-Schnittlinie des ersten starren Clips aufweist, mit einer Bodenoberfläche des ersten starren Clips überlappt, so dass die Kupferfolie der zweiten Antenne und der Radiofrequenzidentifikationschip zwischen dem ersten starren Clip und dem zweiten starren Clip gepackt sind, und eine Bodenoberfläche des zweiten starren Clips als eine Montageoberfläche dient, wenn das elektronische Etikettenmodulpatch und die metallische erste Antenne miteinander verbunden werden;
bei dem Montageprozess des elektronischen Etiketts wird eine Montageoberfläche des elektronischen Etikettenmodulpatches an die Resonanzkammer der ersten metallischen Antenne geklebt und mit der metallischen Grundoberfläche innerhalb des konkaven Schlitzes verbunden, so dass die Kupferfolienschleife der zweiten Antenne oder die Induktivität an die metallische erste Antenne an dem rechteckigen eingesenkten Bereich angepasst ist, um eine Resonanz und Induktion zu erzeugen;
bei dem Versiegelungsprozess des elektronischen Etiketts wird ein kolloidaler Füllungsklebstoff, der in die Resonanzkammer der ersten metallischen Antenne, den äußeren Schlitz des metallischen ersten Antennenkörpers und den konkaven Schlitzes durch Klebstoffeintropfen oder Klebstofffüllen gefüllt und mit dem elektronischen Etikettenmodulpatch befestigt wird, durch Backen und Kühlungsprozesse in einem Ofen behandelt, so dass das elektronische Etikettenmodulpatch durch den ausgehärteten Füllungsklebstoff versiegelt und an die metallische erste Antenne geklebt wird, und die metallische erste Antenne ist mit einer geschliffenen und schmückenden geklebten Oberfläche versehen; und bei dem Identitätsoberflächenbehandlungsprozess wird die metallische erste Antenne, die in dem Versiegelungsvertahren des elektronischen Etiketts behandelt wird, beschichtet oder eine Oberfläche davon wird mit einem keramischen Anti-Interferenz-Anstrich besprüht und durch Backen und Kühlungsvertahren in dem Ofen behandelt, so dass eine Anti-Interferenz-Oberflächenschicht an der Oberfläche der metallischen ersten Antenne ausgebildet wird.

2. Verfahren zur Herstellung eines langreichweitigen metallischen Radiofrequenzidentifikationsproduktes nach Anspruch 1, wobei
bei der Vorbereitung der metallischen ersten Antenne die metallische erste Antenne durch Formen der Resonanzkammer auf dem metallischen ersten Antennenkörper in dem Formungsherstellungsprozess des Resonanzkörpers gebildet wird, der rechteckige eingesenkte Bereich der Resonanzkammer, der eine etwas größere Breite als der innere Schlitz hat, ist abwärts von einer Ebene der metallischen Grundoberfläche in dem konkaven Schlitz eingesenkt;
bei dem Chipklebeprozess zur Bereitstellung der Antenne bei der Vorbereitung des elektronischen Etikettenmodulpatches wird die Breite des rechteckigen eingesenkten Bereiches entsprechend der Breite des inneren Schlitzes der Resonanzkammer durch Ätzen ausgebildet, der rechteckige eingesenkte Bereich hat eine Länge, die geeignet ist, eine rechteckige Kupferfolienschleife der zweiten Antenne, die in dem rechteckigen eingesenkten Bereich der Resonanzkammer angeordnet ist, zu überschreiten, und die Kupferfolienschleife der zweiten Antenne und der Radiofrequenzidentifikationschip sind durch Kleben des zweiten starren Clips und des ersten starren Clips gepackt, wie auch das elektronische Etikettenmodulpatch in dem Modulverpackungsprozess ausgebildet wird, nachdem die Kupfertolienschleife der zweiten Antenne elektrisch mit dem Radiofrequenzidentifikationschip an dem ersten starren Clip verbunden wird; und bei dem Montageprozess des elektronischen Etiketts wird das elektronische Etikettenmodulpatch an die metallische Grundoberfläche des konkaven Schlitzes der Resonanzkammer der metallischen ersten Antenne in einer Art und Weise unter Verwendung der Kupferfolienschleife der zweiten Antenne geklebt, um an dem rechteckigen eingesenkten Bereich mit zwei Enden, die im Durchschnitt in die inneren Schlitze reichen, angeordnet zu sein, so dass die Schleifenfaltlinie der zweiten Antenne ein ideales Feldmuster hat, das mit der metallischen ersten Antenne an der Resonanzkammer zusammenpasst.

3. Das Verfahren zur Herstellung eines langreichweitigen metallischen Radiofrequenzidentifikationsproduktes nach Anspruch 1, wobei bei dem Identitätsoberflächenbehandlungsprozess die Anti-Interferenz-Oberflächenschicht, die auf der Oberfläche der metallischen ersten Antenne ausgebildet ist, geeignet ist, darauf mit Buchstaben, Nummern oder Figuren bedruckt zu werden.

4. Das Verfahren zur Herstellung eines langreichweitigen metallischen Radiofrequenzidentifikationsproduktes nach Anspruch 1, wobei bei dem Identitätsoberflächenbehandlungsprozess die Oberfläche der ersten metallischen Antenne, die bei dem Versiegelungsprozess des elektronischen Etiketts behandelt wird, geeignet ist, mit konkaven oder konvexen Buchstaben, Nummern oder Figuren durch Austanzen ausgebildet zu werden und dann mit dem keramischen Anti-Interferenz-Anstrich beschichtet oder gefärbt zu werden.

5. Eine Struktur eines langreichweitigen metallischen Radiofrequenzidentifikationsproduktes umfasst:
eine metallische erste Antenne (10), umfassend einen metallischen ersten Antennenkörper (11), der teilweise oder gänzlich aus einer metallischen Plattenform eines metallischen Produkts hergestellt ist, der metallische erste Antennenkörper (11) umfasst eine Seitenwand, die mit einer Resonanzkammer (12) einschließlich eines geometrischen konkaven Schlitzes (122), der an einem Schnittpunkt von zwei langen inneren Schlitzen (120) und einem äußeren Schlitz (121) ausgebildet ist, versehen ist und eine Höhendifferenz bezogen auf eine Außenlochoberfläche und einen rechteckigen eingesenkten Bereich (123), der an dem Schnittpunkt der inneren Schlitze (120) und des äußeren Schlitzes (121) innerhalb des konkaven Schlitzes ausgebildet ist, aufweist, wobei die zwei inneren Schlitze (120) parallel zu der Seitenwand des metallischen ersten Antennenkörpers (11) ausgerichtet sind und der äußere Schlitz (121) senkrecht zu der Seitenwand des metallischen ersten Antennenkörpers (11) ausgerichtet ist, ein keramischer dünner Anti-Interferenz-Film ist an der Oberfläche der Resonanzkammer (12) ausgebildet, und eine innere Oberfläche des konkaven Schlitzes (122), der außerhalb des rechteckigen eingelassenen Bereiches (123) angeordnet ist, dient als eine metallische Grundoberfläche (124) für die Resonanzkammer (12), und
ein elektronisches Etikettenmodulpatch (20), das an die metallische Grundoberfläche der Resonanzkammer (12) der metallischen ersten Antenne (10) geklebt ist und befestigend versiegelt und an die metallische erste Antenne (10) durch einen Füllungsklebstoff, der in der Resonanzkammer (12) der ersten metallischen Antenne (10) durch Klebstoffeintropfen oder Klebstofffüllen gebildet ist, geklebt und durch Backen ausgehärtet wird, umfasst ein dünnes Plattensubstrat (21), das aus einem isolierenden Material mit einem niedrigen dielektrischen Koeffizienten hergestellt ist, ein erster starrer Clip (22), der aus einem isolierenden Material mit einem niedrigen dielektrischen Koeffizienten hergestellt ist und mit einer Bruch-Schnittlinie (220) versehen ist, um mit dem dünnen Plattensubstrat (21) verklebt zu werden, eine zweite Antenne (23) ist an den ersten starren Clip (22) befestigend geklebt und dient als eine rechteckige Kupferfolienschleife der Antenne (23) oder Induktivität, ein Radiofrequenzidentifikationschip (24) ist befestigend an den ersten starren Clip (22) geklebt und elektrisch mit der zweiten Antenne (23) verbunden, und ein zweiter starrer Clip (25) ist aus einem isolierenden Material mit einem niedrigen dielektrischen Koeffizienten hergestellt und mit einer Bruch-Schnittlinie entsprechend zu dem ersten starren Clip (22) versehen, wobei der zweite starre Clip (25) an den ersten starren Clip (22) geklebt ist, so dass die zweite Antenne (23) und der Radiofrequenzidentifikationschip (24) zwischen dem ersten starren Clip (22) und dem zweiten starren Clip (25) gepackt sind, und eine Bodenoberfläche des zweiten starren Clips (25) dient als eine Montageoberfläche (250), die an die metallischen Grundoberfläche (124) der Resonanzkammer (12) der metallischen ersten Antenne (10) geklebt ist.

6. Die Struktur des langreichweitigen metallischen Radiofrequenzidentifikationsproduktes nach Anspruch 5, wobei der rechteckige eingelassene Bereich (123) der Resonanzkammer (12) der metallischen ersten Antenne (10) eine Breite hat, die etwas größer als der innere Schlitz (120) ist und abwärts abgesenkt ist von einer Ebene der metallischen Grundoberfläche (124) innerhalb des konkaven Schlitzes (122), und die rechteckige Kupferfolienschleife der zweiten Antenne (23) des elektronischen Etikettenmodulpatches (20), das an dem rechteckigen eingesenkten Bereich (123) der Resonanzkammer (12) der metallischen ersten Antenne (10) angeordnet ist, hat eine Breite entsprechend zu der Breite des inneren Schlitzes (120) der Resonanzkammer (12) und eine Länge, die geeignet ist, den rechteckigen eingesenkten Bereich (123) der Resonanzkammer (12) zu überschreiten und im Durchschnitt in die inneren Schlitze (120) hineinzureichen.

7. Die Struktur des langreichweitigen metallischen Radiofrequenzidentifikationsproduktes nach Anspruch 5, wobei das elektronische Etikettenmodulpatch (20) fixierend versiegelt und an die metallische erste Antenne (10) durch den ausgehärteten Füllungsklebstoff geklebt ist, und die metallische erste Antenne (10) hat eine geschliffene und schmückende geklebte Oberfläche, die mit einem keramischen Anti-Interferenz-Anstrich beschichtet ist, die als eine Anti-Interferenz-Oberflächenschicht zur Verhinderung von Interferenz dient.

8. Die Struktur des langreichweitigen metallischen Radiofrequenzidentifikationsproduktes nach Anspruch 7, wobei die Anti-Interferenz-Oberflächenschicht der ersten metallischen Antenne (10) mit Buchstaben, Nummern oder Figuren darauf bedruckt ist.

9. Die Struktur des langreichweitigen metallischen Radiofrequenzproduktes nach Anspruch 5, wobei das elektronische Etikettenmodulpatch (20) fixierend an die erste metallische Antenne (10) geklebt ist und die metallische erste Antenne (10) eine geschliffene und schmückende geklebte Oberfläche hat, die geeignet ist, mit konkaven oder konvexen Buchstaben, Nummern oder Figuren durch Ausstanzen versehen zu werden und dann mit dem keramischen Anti-Interferenz-Anstrich beschichtet oder durch Backen gefärbt zu werden.

## Revendications

1. Procédé de fabrication d'un produit métallique à identification par radiofréquence à longue portée, comprenant les étapes de :
préparation d'une première antenne métallique, préparation d'un raccordement de module d'étiquette électronique, processus de montage d'étiquette électronique, processus de scellement d'étiquette électronique et processus de traitement de surface d'identité ;
dans la préparation de la première antenne métallique, une première antenne métallique étant fabriquée par un processus de fabrication de corps de première antenne métallique, un processus de fabrication par moulage de chambre de résonance et un processus de traitement de surface de chambre de résonance ;
dans le processus de fabrication de corps de première antenne métallique, un corps de première antenne métallique d'une forme prédéterminée étant formé par poinçonnage sur une plaque métallique choisie parmi un produit métallique ;
dans le processus de fabrication par moulage de chambre de résonance, deux longues fentes intérieures et une fente extérieure étant formées sur une paroi latérale du corps de première antenne métallique par poinçonnage, une fente à géométrie concave étant formée sur une intersection des fentes internes et de la fente extérieure et ayant une différence de hauteur par rapport à une surface extérieure de trou par poinçonnage ou forgeage ou usinage d'une machine à fraiser à commande numérique informatique, et une portion évidée rectangulaire moulée en tant que chambre de résonance étant formée sur l'intersection des fentes intérieures et de la fente extérieure au sein de la fente concave, dans lequel une surface intérieure de la fente concave située à l'extérieur de la portion évidée rectangulaire sert de surface de sol métallique pour la chambre de résonance ;
dans le processus de traitement de surface de chambre de résonance, une surface de la surface de chambre de résonance étant traitée par un traitement céramique de sorte qu'un film mince en céramique anti-interférence soit formé sur la surface de la chambre de résonance ;
dans la préparation de raccordement de module d'étiquette électronique, un raccordement de module d'étiquette électronique étant formé par un processus intégré au substrat, un processus de soudage de puce d'allocation d'antenne et un processus de conditionnement de module, dans lequel dans le processus intégré au substrat, une première pince rigide réalisée en matériau isolant à faible coefficient diélectrique et pourvue d'un trait de coupe de cassure est soudée à un substrat rigide en plaque mince réalisé en un matériau à faible coefficient diélectrique, dans le processus de soudage de puce d'allocation d'antenne, une seconde antenne cadre en feuille de cuivre ou inductance formée par gravure et une puce d'identification par radiofréquence sont soudées fixement sur la première pince rigide, et une pluralité de fils métalliques conducteurs réalisés en or, aluminium et cuivre sont connectés électriquement entre la seconde antenne en feuille de cuivre et la puce d'identification par radiofréquence sur la première pince rigide par soudure de fils, et dans le processus de conditionnement de module, une seconde pince rigide qui est constituée d'un matériau isolant à faible coefficient diélectrique et pourvue d'un trait de coupe de cassure correspondant au trait de coupe de cassure de la première pince rigide est chevauchée sur une surface de fond de la première pince rigide de sorte que la seconde antenne en feuille de cuivre et la puce d'identification par radiofréquence soient conditionnées entre la première pince rigide et la seconde pince rigide, et une surface de fond de la seconde pince rigide sert de surface de montage lorsque le raccordement de module d'étiquette électronique et la première antenne métallique sont assemblés ;
dans le processus de montage d'étiquette électronique, une surface de montage du raccordement de module d'étiquette électronique est soudée à la chambre de résonance de la première antenne métallique et assemblée sur la surface de sol métallique au sein de la fente concave de sorte que la seconde antenne cadre en feuille de cuivre ou inductance concorde avec la première antenne métallique au niveau de la portion évidée rectangulaire afin de générer une résonance et une induction ;
dans le processus de scellement d'étiquette électronique, une colle de remplissage colloïdale, remplissant la chambre de résonance de la première antenne métallique, la fente extérieure du corps de première antenne métallique et la fente concave fixée au raccordement de module d'étiquette électronique par goutte-à-goutte de colle ou remplissage de colle, est traitée par des processus de cuisson et de refroidissement dans une étuve de sorte que le raccordement de module d'étiquette électronique soit scellé et lié dans la première antenne métallique par la colle de remplissage durcie et que la première antenne métallique soit pourvue d'une surface collée rectifiée et décorée ; et
dans le processus de traitement de surface d'identité, la première antenne métallique traitée dans le processus de scellement d'étiquette électronique est revêtue ou pulvérisée sur une surface de celle-ci avec une peinture céramique anti-interférence ou traitée par des processus de cuisson et de refroidissement dans l'étuve de sorte qu'une couche de surface anti-interférence soit formée sur la surface de la première antenne métallique.

2. Procédé de fabrication d'un produit métallique à identification par radiofréquence à longue portée selon la revendication 1, dans lequel
dans la préparation de la première antenne métallique, la première antenne métallique est formée par moulage de la chambre de résonance sur le corps de première antenne métallique dans le processus de fabrication par moulage de chambre de résonance, la portion évidée rectangulaire de la chambre de résonance ayant une largeur légèrement supérieure à celle de la fente intérieure est évidée vers le bas à partir d'un plan de la surface de sol métallique au sein de la fente concave ;
dans le processus de soudage de puce d'allocation d'antenne de la préparation de raccordement de module d'étiquette électronique, la largeur de la portion rectangulaire évidée correspondant à la largeur de la fente intérieure de la chambre de résonance est formée par gravage, la portion rectangulaire évidée a une longueur capable de dépasser une seconde antenne cadre en feuille de cuivre disposée dans la portion rectangulaire évidée de la chambre de résonance, et la seconde antenne cadre en feuille de cuivre et la puce d'identification par radiofréquence sont conditionnées par le soudage de la seconde pince rigide et de la première pince rigide, de même le raccordement de module d'étiquette électronique est formé dans le processus de conditionnement de module après que la seconde antenne cadre en feuille de cuivre est connectée électriquement à la puce d'identification par radiofréquence sur la première pince rigide ; et
dans le processus de montage d'étiquette électronique, le raccordement de module d'étiquette électronique est soudé sur la surface de sol métallique de la fente concave de la chambre de résonance de la première antenne métallique de façon à utiliser la seconde antenne cadre en feuille de cuivre à situer au niveau de la portion rectangulaire évidée avec deux de ses extrémités étendues en moyenne dans les fentes intérieures de sorte que la seconde antenne cadre à ligne de pliure ait un diagramme de rayonnement idéal concordant avec la première antenne métallique sur la chambre de résonance.

3. Procédé de fabrication d'un produit métallique à identification par radiofréquence à longue portée selon la revendication 1, dans lequel dans le processus de traitement de surface d'identité, la couche de surface anti-interférence formée sur la surface de la première antenne métallique est capable de recevoir une impression de caractères, de nombres ou de chiffres.

4. Procédé de fabrication d'un produit métallique à identification par radiofréquence à longue portée selon la revendication 1, dans lequel dans le processus de traitement de surface d'identité, la surface de la première antenne métallique traitée dans le processus de scellement d'étiquette électronique est capable d'être formée de caractères, nombres ou chiffres concaves ou convexes par poinçonnage puis d'être revêtue de la peinture céramique anti-interférence ou colorée.

5. Structure de produit métallique à identification par radiofréquence à longue portée, comprenant :
une première antenne métallique (10), comprenant un corps de première antenne métallique (11) partiellement ou totalement constitué d'une forme de plaque métallique d'un produit métallique, le corps de première antenne métallique (11) comprenant une paroi latérale pourvue d'une chambre de résonance (12) incluant une fente de géométrie concave (122) qui est formée sur une intersection de deux longues fentes intérieures (120) et d'une fente extérieure (121) et ayant une différence de hauteur par rapport à une surface extérieure de trou et une portion rectangulaire évidée (123) qui est formée sur l'intersection des fentes intérieures (120) et de la fente extérieure (121) au sein de la fente concave, dans laquelle les deux fentes intérieures (120) sont parallèles à la paroi latérale du corps de première antenne métallique (11) et la fente extérieure (121) est perpendiculaire à la paroi latérale du corps de première antenne métallique (11), un film mince en céramique anti-interférence étant formé sur la surface de la chambre de résonance (12), et une surface intérieure de la fente concave (122) qui est située à l'extérieur de la portion rectangulaire évidée (123) sert de surface de sol métallique (124) pour la chambre de résonance (12) ; et
un raccordement de module d'étiquette électronique (20) soudé sur la surface de sol métallique de la chambre de résonance (12) de la première antenne métallique (10) et scellé fixement et lié dans la première antenne métallique (10) par une colle de remplissage qui est formée dans la chambre de résonance (12) de la première antenne métallique (10) par goutte-à-goutte de colle ou remplissage de colle et durcie par cuisson, comprenant un substrat en plaque mince (21) réalisé en un matériau à faible coefficient diélectrique, une première pince rigide (22) réalisée en un matériau isolant à faible coefficient diélectrique et pourvue d'un trait de coupe de cassure (220) à souder au substrat en plaque mince (21), une seconde antenne (23) soudée fixement sur la première pince rigide (22) et servant d'antenne cadre rectangulaire en feuille de cuivre (23) ou d'inductance, une puce d'identification par radiofréquence (24) soudée fixement sur la première pince rigide (22) et connectée électriquement à la seconde antenne (23), et une seconde pince rigide (25) réalisée en un matériau isolant à faible coefficient diélectrique et pourvue d'un trait de coupe de cassure correspondant à la première pince rigide (22), dans laquelle la seconde pince rigide (25) est soudée à la première pince rigide (22) de sorte que la seconde antenne (23) et la puce d'identification par radiofréquence (24) soient conditionnées entre la première pince rigide (22) et la seconde pince rigide (25), et une surface de fond de la seconde pince rigide (25) sert de surface de montage (250) soudée à la surface de sol métallique (124) de la chambre de résonance (12) de la première antenne métallique (10).

6. Structure de produit métallique à identification par radiofréquence à longue portée selon la revendication 5, dans laquelle la portion rectangulaire évidée (123) de la chambre de résonance (12) de la première antenne métallique (10) ayant une largeur légèrement supérieure à celle de la fente intérieure (120) est évidée vers le bas à partir d'un plan de la surface de sol métallique (124) au sein de la fente concave (122), et la seconde antenne cadre rectangulaire en feuille de cuivre (23) du raccordement de module d'étiquette électronique (20) située au niveau de la portion rectangulaire évidée (123) de la chambre de résonance (12) de la première antenne métallique (10) a une largeur correspondant à la largeur de la fente intérieure (120) de la chambre de résonance (12) et une longueur capable de dépasser la portion rectangulaire évidée (123) de la chambre de résonance (12) et étendue en moyenne dans les fentes intérieures (120).

7. Structure de produit métallique à identification par radiofréquence à longue portée selon la revendication 5, dans laquelle le raccordement de module d'étiquette électronique (20) est scellé fixement et lié dans la première antenne métallique (10) par la colle de remplissage durcie, et la première antenne métallique (10) a une surface collée rectifiée et décorée revêtue d'une peinture céramique anti-interférence qui sert de couche de surface anti-interférence pour résister à une interférence.

8. Structure de produit métallique à identification par radiofréquence à longue portée selon la revendication 7, dans laquelle la couche de surface anti-interférence de la première antenne métallique (10) est imprimée de caractères, de nombres ou de chiffres.

9. Structure de produit métallique à identification par radiofréquence à longue portée selon la revendication 5, dans laquelle le raccordement de module d'étiquette électronique (20) est lié fixement dans la première antenne métallique (10), et la première antenne métallique (10) a une surface collée rectifiée et décorée capable d'être formée de caractères, de nombres ou de chiffres concaves ou convexes par poinçonnage puis d'être revêtue de la peinture céramique anti-interférence ou colorée par cuisson.
